**Europäisches Patentamt**

**European Patent Office**

**Office européen des brevets**

(19)

(11) Publication number : **0 597 696 A2**

# (12) EUROPEAN PATENT APPLICATION

(21) Application number : **93308985.6**

(22) Date of filing : **10.11.93**

(51) Int. Cl.⁵ : **H04N 1/46**

(30) Priority : **10.11.92 JP 300074/92**

(43) Date of publication of application :
**18.05.94 Bulletin 94/20**

(84) Designated Contracting States :
**DE FR GB**

(71) Applicant : **NIKON CORPORATION**
**2-3, Marunouchi 3-chome Chiyoda-ku**
**Tokyo 100 (JP)**

(72) Inventor : **Kawahara, Atsushi**
**2-4-14 Tachibana-dai, Midori-ku**
**Yokohama-shi, Kanagawa-ken (JP)**

(74) Representative : **Burke, Steven David et al**
**R.G.C. Jenkins & Co. 26 Caxton Street**
**London SW1H 0RJ (GB)**

(54) **Color image reading apparatus.**

(57) A color image reading apparatus has three light sources to emit light in each of the blue, green and red wavelengths of the light spectrum respectively. The apparatus provides the for the illumination of an original image by at least one blue fluorescent tube which remains ON during all phases of the apparatus' operation. When only the blue fluorescent tube is ON, blue image data are prepared from the data accumulated in a linear imaging sensor. When the blue fluorescent tube and the green light source are emitting light, green data about the original image are prepared by canceling the blue data from the data accumulated in the linear imaging sensor. Finally, when the blue fluorescent tube and the red light source are both emitting light, red data about the original image are prepared by canceling the blue data from the data accumulated in the linear imaging sensor.

*FIG. 3*

EP 0 597 696 A2

## BACKGROUND OF THE INVENTION

### 1. Field of the Invention

The present invention relates to devices used to analyze color attributes of images. More particularly, the present invention relates to a color image reading apparatus having three light sources respectively emitting light in the blue, green and red wavelength regions of the light spectrum.

### 2. Description of Related Art

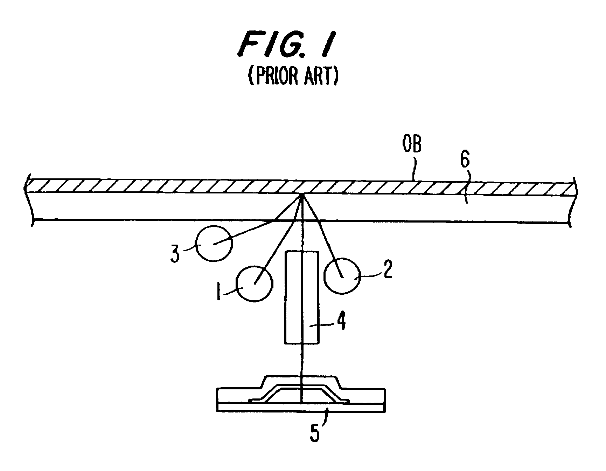

Color image attribute reading apparatuses are well known in the field of photography and digital imaging. A typical example of a color image reading apparatus is shown in FIG. 1.

The color image reading apparatus of FIG. 1 has three fluorescent tubes 1-3. Fluorescent tubes 1-3 respectively emit light in the blue, the green, and the red wavelength regions of the light spectrum. Moreover, each fluorescent tube 1-3 is driven (i.e., illuminated) according to a set timing sequence or time division to illuminate which shall hereinafter be referrcd to as an "original" and which is image supported by a support 6. The original presents the subject to be read and color analyzed. For example, the original may be a film having a color image contained thereon. The illumination of the original by fluorescent tubes 1-3 is typically done in a flashing manner which is well known in the art.

The light from the fluorescent tubes 1-3, which is emitted and reflected by the original is imaged by an imaging lens 4 onto a monochrome linear image sensor 5. According to the respective wavelengths of the reflected light, three image signals are generated per line.

Despite the fact that the color reading apparatuses of the type just described have worked for many years, such apparatuses are subject to numerous problems and disadvantages, including the following:

(1) The nature of the time division illumination of the fluorescent tubes requires complicated and costly flashing and other circuitry.

(2) Exposure adjustment of monochrome linear image sensors is difficult because fluorescent tubes like those depicted at reference numerals 1-3 have varied afterglow times.

(3) Fluorescent tubes like those depicted at reference numerals 1-3 are temperature dependant. As such, fluorescent tubes each have different light emission properties. Thus, it is necessary to prevent light emission effects due to temperature fluctuations.

(4) Fluorescent tubes 1-3 have short service lives when driven in a flashing mode.

Problems of the kind just listed are practically solved if the fluorescent tubes 1-3 are replaced with light emitting diodes. However, the amount of light generated by light emitting diodes in the blue wavelength region is insufficient for a color image reading apparatus. Moreover, it is difficult to incorporate blue color light emitting diodes at the present time.

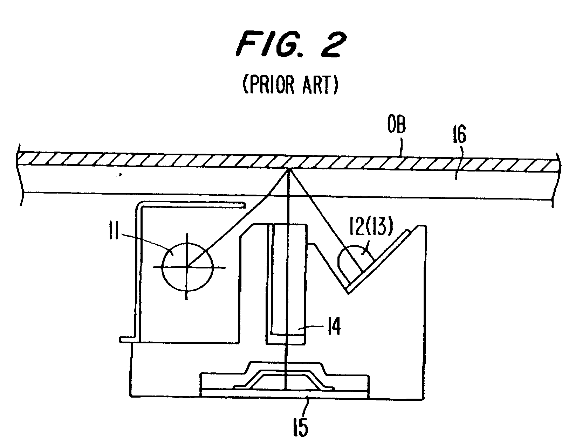

FIGURE 2 depicts a color image reading apparatus which incorporates a single fluorescent tube 11 for providing blue light. In contrast to the embodiment depicted in Claim 1, however, respective green and red light emitting diodes 12 and 13 are used for providing light in the green and red wavelength regions of the light spectrum. All three light sources 11-13 are driven in a flashing mode manner. In FIG. 2, 14 is a lens, and 15 is a monochrome linear image sensor. While the color reading apparatus depicted in FIG. 2 is an overall improvement of the structure depicted in FIG. 1, the above-listed problems still are not solved. In particular, the color reading apparatus of FIG. 2 still requires a costly flashing mode drive circuit and still does not adequately deal with the problems associated with short bulb life.

The present invention overcomes the problems associated with the aforementioned color image reading apparatuses.

## SUMMARY OF THE INVENTION

It is therefore an object of the present invention to provide a color image reading apparatus designed to be equipped with a low cost flash lighting source which, in turn, also will provide a long light-source service life.

It is a further object of the present invention to provide a color image reading apparatus which has a blue light source which is not flashed.

It is yet another object of the present invention to provide a color image reading apparatus which uses light properties to cancel (e.g., by removing) the effects of various light wavelengths in forming color image data.

It is still another object of the present invention to provide a color image reading apparatus which has a blue light source which is kept on during all phases of operation, but in which the effects of such blue light are removed by a process of cancelling out or removing (e.g. via substraction or other arithematic or logical operation) blue light using known light properties and mathematical processing.

These and other objects are achieved by the present invention in that a color image reading apparatus is provided which is equipped with a first light source which emits light in the blue wavelength region of the light spectrum, a second light source which emits light in the green wavelength region of the light spectrum, and a third light source which emits light in the red wavelength region of the light spectrum. The apparatus also includes a controller which is used to control the amount of light of each light source. When the illuminating light from each light source is radiated onto the subject to be read, light receiving circuitry is used to receive the light reflected by the subject. Moreover, image data formation circuitry used to form color image data based on the received light signals of the light receiving circuitry.

By means of lamp extinction circuitry (i.e., circuitry to turn light sources on and off) and lighting control circuitry, a first illumination state in which the first light source is ON, and a second illumination state in which the first light source and the second light source both are ON, and a third illumination state in which the first light source and the third light source 33 both are ON, are obtained. As such, color image data are generated by means of the image data generation circuitry based on a first signal output from the light receiving circuitry in the first illumination state, and in the aforementioned second illumination state, on a second signal having the effect due to the aforementioned first light source canceled from the light receiving signal output from the aforementioned light receiving means, and in the aforementioned third illumination state, on a third signal having the effect due to the aforementioned first light source canceled from the signals output from the aforementioned light receiving circuitry.

Moreover, the present invention provides a color image reading apparatus which is suited to operate as a color balance adjustment apparatus. The color balance adjustment apparatus has detection circuitry for detecting the amount of light emitted from the first light source. Moreover, the color balance adjustment apparatus operates in such a manner that the lower the amount of light detected in the second and third illumination states, the weaker the emission luminous intensity or the shorter the light emission time of the second and third light sources.

## BRIEF DESCRIPTION OF THE DRAWINGS

The above-mentioned and other objects and advantages of the present invention will become apparent and more readily appreciated from the following description of the preferred embodiments, taken in conjunction with the accompanying drawings, of which:

FIG. 1 is a diagram which depicts a prior art example of a color image reading apparatus,

FIG. 2 is a diagram which depicts another prior art example of a color image reading apparatus.

FIG. 3 is a diagram which shows the illuminating optical system and the light receiving optical system of a preferred embodiment of the present invention.

FIG. 4 is a block diagram which shows the electrical system of an embodiment of a color image reading apparatus according to a preferred embodiment of the present invention.

FIG. 5 is a timing chart which illustrates the action of the electrical system of FIG. 4.

FIG. 6 is a flow chart which illustrates the action of the embodiments of the color image reading apparatuses according to a preferred embodiment of the present invention.

FIG. 7 is a flow chart which illustrates the operations involved in perforrming the accumulation (integration) time setting routine of FIG. 3.

FIG. 8 is a flow chart which illustrates the operations involved in performing the preparation routine for the dark output table discussed in regard to FIG. 3.

FIG. 9 is a flow chart which illustrates the operations involved in performing the reading routine which reads out one line of data discussed in regard to FIG. 3.

FIG. 10 is a timing chart which illustrates the actions of FIG. 3.

## DETAILED DESCRIPTION OF THE PREFERRED EMBODIMENTS

The present invention is described with reference to drawing FIGURES 1-10 which were briefly described above and which are now referred to in order to provide a detailed description of the preferred embodiments. Like parts will be identified with like reference numerals.

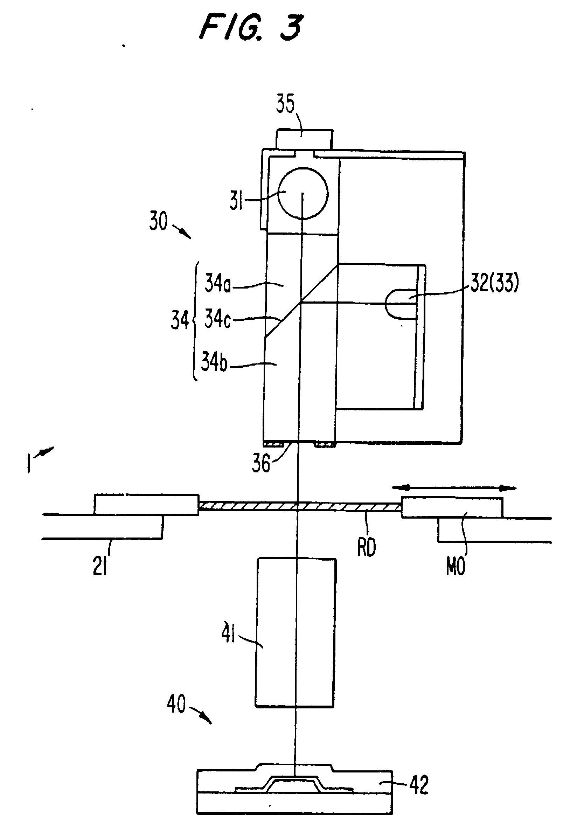

Referring now to FIGS. 3-5, a first embodiment is depicted and will now be described.

Referring now to FIG. 3, therein depicted is an optical system 30 of a color image reading apparatus 1 which is arranged to read a 35 mm film original according to the teachings of present invention. The 35 mm film RD which provides the imaging subject to be color analyzed moves from left to right and is supported by a holder 21. The color reading apparatus 1 is arranged so that light from the illuminating light optics 30 located above film RD passes through film RD and is received by light receiving optics 40. Moreover, film RD is mounted in a mount MO.

Illuminating optical system 30 is equipped with a fluorescent tube 31 which emits light in the blue wavelength region of the light spectrum. A green light emitting diode array 32 is used to emit light in a green wavelength region of the light spectrum. Green light emitting diode array 32 is located in illuminating optical system 30 in a manner so that it emits light in a direction which is substantially parallel to the plain of film RD. Also housed adjacent green light emitting diode array 32 is a red light emitting diode array 33 which emits light in a red wavelength region of the light spectrum. As with green light emitting diode array 32; red light emitting diode array 33 emits light in a direction which is substantially parallel to film RD. To alternate the light emitted by green light emitting diode array 32 and red light emitting diode array 33, a light guide 34 is used. Light guide 34 includes a spectral transmission/reflection mirror 34c and has a junction surface including two plastic members 34a and 34b. The blue light emitted by the blue color fluorescent tube 31 is emitted rectilinearly along the optical axis of the light guide 34 to illuminate film RD. Moreover, the light emitted respectively by green light emitting diode array 32 and by red light emitting diode 33 array also are deflected downwards by the spectral transmission/reflection mirror 34c to illuminate film RD. Photodiode 35 detects the amount of light emitted by blue fluorescent tube 31, and as mentioned hereinbelow, is used to compensate for changes in the amount of light emitted by blue fluorescent tube 31, which is dependant on temperature. Reference numeral 36 depicts a light screening slit which is used to insure that film RD is not illuminated with unnecessary, extra light.

It is important to note that green light emitting diode array 32 and red light emitting diode array 33 may each comprise one or more light emitting diodes (LEDs) and should not be restricted to a plurality as one may interpret the term "array."

The light receiving optical system 40 includes a lens 41 and a monochrome linear image sensor 42. Preferably, plural charge coupled type pixels are arranged substantially perpendicular to the optical axis formed between light receiving optical system 40 and illuminating optical system 30 to form the monochrome linear image sensor 42. Light receiving optical system 40 is arranged to read one line of the image contained on film RD at a time in main and auxiliary scanning directions. The single line is read out in the scanning direction of the arranged direction of the pixels forming the monochrome linear image sensor 42 in the main scanning direction from right to left. In order for film RD to be scanned in an auxiliary scanning direction from left to right, support 21 for the original is arranged so that it can be moved left and right by a drive device which is not shown in the drawing. By means of a main scan and an auxiliary scan, the image found on film RD is read out in 2 dimensions.

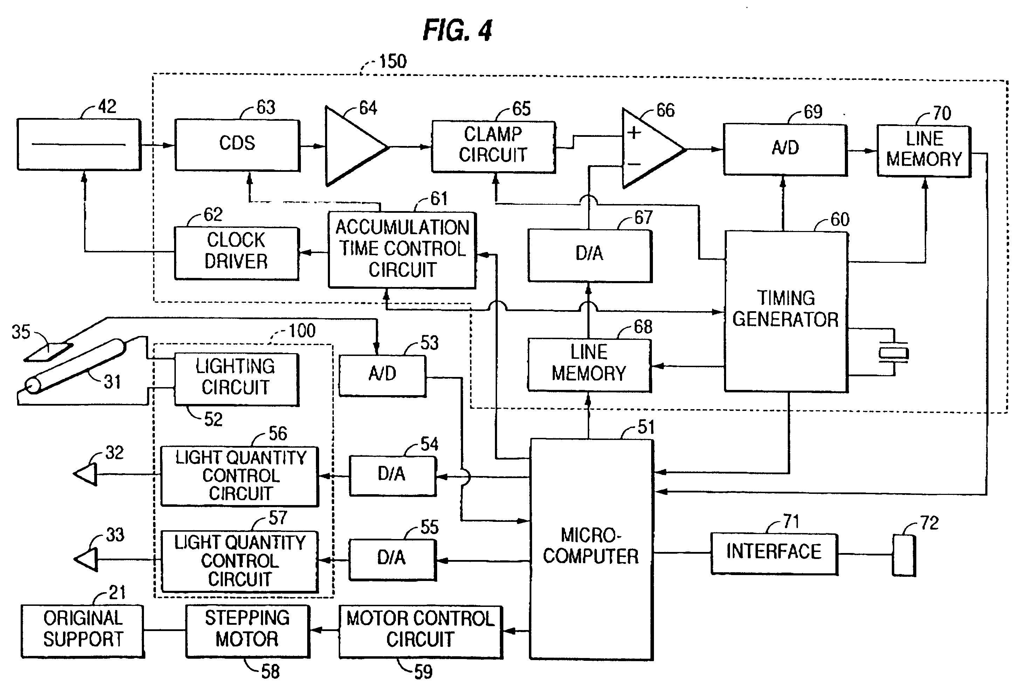

FIG. 4, is a block diagram of the electrical system of the color reading apparatus depicted in FIG. 3. Microcomputer 51 effects control of the electrical system. Reference numeral 52 denotes the lighting circuit used to operate fluorescent lamp 31. A/D converter circuit 53 is used to convert to analog signals from the light quantity sensor 35 into digital signals. Reference numerals 54 and 55 denote latching D/A converters which are both used to convert the digital lighting signals from the microcomputer 51 into analog signals. Light quantity control circuits 56 and 57 are used to control the flashing and the luminous emission intensity of the light emitting diode arrays 32 and 33 by means of the lighting signals from the D/A converter circuits 54, 55.

Here the lamp extinguishing and lighting control circuit 100 is constituted by the lighting circuit 52. Moreover, circuits 56 and 57 control the amount of light which is emitted.

Stepping motor 58 drives support 21 for the original. Moreover, control circuit 59 controls the drive of the stepping motor 58 by means of auxiliary scan signals from microcomputer 51. Support 21 for the original is driven in repeated intermittent movement and is stopped in response to auxiliary scan signals from the microcomputer 51. When the support 21 for the original stops, the linear image sensor 42 electrically scans in the main scanning direction and each line of data is read out. For simplicity, the limit switches and the like used for detection of the end of motion of the support 21 for the original are omitted from the drawing.

System timing generator 60 supplies timing pulses to each instrument and circuit depicted in FIG. 4. Accumulation time control circuit 61 is used to generate the pulses necessary for the drive of the linear image sensor 42 via a clock driver 62. Accumulation time control signals are input to the accumulation time control circuit 61 from the microcomputer 51, the accumulation time of the linear image sensor 42 thus being constituted such that it can be controlled by the microcomputer 51.

The amounts of light emitted by the three light sources, blue, green and red, are normally slightly different. For example, the amount of light of the red light emitting diode array may be greater than the amount of light of the green light emitting diode array. Of course, each light source may be selected so that the amounts of light are substantially equal. Because of the variance in light emission from the three light sources, adjusting the accumulation time of the linear image sensor 42 corresponding to the variation of the amount of light of each light source is a generally well known and easy-to-implement method. However, in the present embodiment the accumulation times are considered to be equal in order to simplify the description. If the amount of light of each light source can be made practically equal, it is not necessary for the accumulation time of the linear image sensor 42 to change in response to the amount of light, and the circuit is simplified.

Correlated double sampling (CDS) circuit 63 is arranged to receive pulses generated by the accumulation time control circuit 61, and to perform CDS on the analog data output from the linear image sensor 42 in order to improve the signal-to-noise (S/N) ratio. The readout signal output from the CDS circuit 63 is amplified by an amplifier 64 to a level suitable for later processing. Furthermore the standard level of the readout signal is kept fixed by a clamp circuit 65 which is synchronized with timing pulses from the timing pulse generator 60.

The output of the clamp circuit 65 is input to the non-inverting input terminal of a subtraction circuit 66. The signal of the inverting input terminal is subtracted from the output of the clamp circuit 65. Data stored in a line memory 68 are input, via a D/A converter circuit 67, to this inverting input terminal. The output of the subtraction circuit 66 is converted to digital signals by an A/D converter circuit 69 and, after having been stored in a line memory 70, is transmitted to a memory, not shown in the drawing, which is coupled to microcomputer 51. Moreover, with timing being performed as mentioned hereinbelow, these data are transmitted to the line memory 68. The line memories 68 and 70 are driven in synchronism with the readout scan of image data. Each address of the line memories is indicated by pulses from timing generator 60. Here, the image data formation circuit 150 is constituted by the respective instruments and circuits referenced by numerals 60-70.

The microcomputer 51 connects to an output connector 72 via a SCSI or GPIB type interface circuit 71. Via output connector 72, image data and the like are transmitted to a host computer.

Keeping in mind the fact that fluorescent lamp 31 is effected by temperature, the amount of light detected by photodiode 35 is used as follows. With a peak luminous emission intensity at a tube wall temperature close to 50°C, the ratio of the amounts of light of the three light sources, namely the color balance, is controlled to be constant by adjusting the emission luminous intensity or the light emission time of the light emitting diodes 32 and 33, based on the amount of light of the fluorescent tube 35 detected by the photodiode 35. Changes of the total amount of illuminating light are dealt with as mentioned hereinabove, by making the accumulation time of the linear image sensor 42 variable.

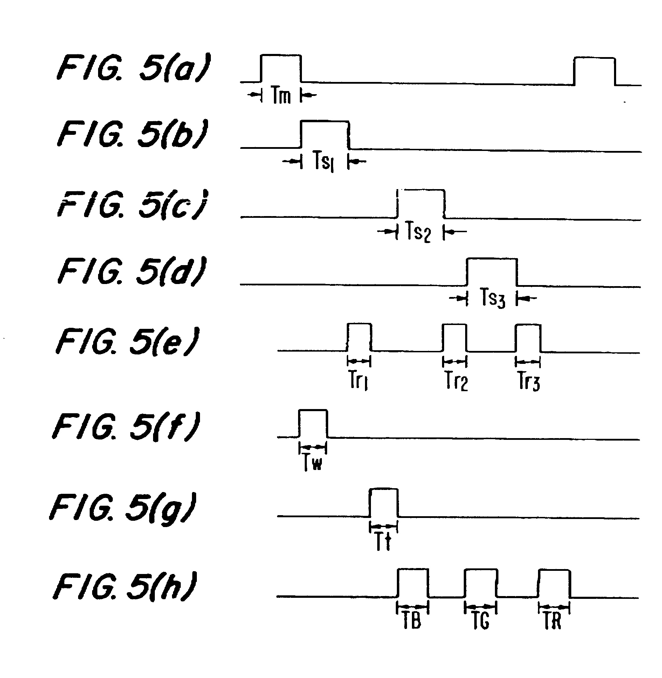

The action and operation of the present embodiment is explained in detail by means of the timing chart of FIG. 5. However, it should be assumed here for purposes of ease of explanation and not as a limitation on the present invention that the linear image sensor 42 will be described as having an accumulation time which is equal for each of the light sources 31-33. Moreover, not illustrated in the timing chart of FIG. 5 is the fact that the blue fluorescent tube 31 is normally lighted during the readout action.

FIG. 5(a) shows the timing of the action of support 21. Support 21 moves in the period Tm, and is shown as stationary at other times. In advance of the readout of the image on film RD, a table is prepared of the relationship of the dark current of linear image sensor 42 to the accumulation time. This can be prepared by detecting the output of the linear imaging sensor 42 while varying the accumulation time and while the three light sources 31-33 are extinguished or set to an "OFF" state. The dark current table prepared in this manner is stored as D (t).

The light passing through film RD by fluorescent tube 31 is incident on the linear imaging sensor 42. Linear imaging sensor 42 receives light and accumulates such during the period $T_{s1}$ shown in FIG. 5(b). The green and red light emitting diode arrays 32 and 33 are extinguished in this period $T_{s1}$. Side by side with this accumulation, in the period $T_w$ shown in FIG. 5(f), the line memory 68 is cleared by writing "0" data. After a charge has been accumulated due to blue illumination on linear imaging sensor 42 during the period $T_{s1}$, data are read out from the linear imaging sensor 42 in the period $T_{r1}$ shown in FIG. 5(e). These data contain the component B ($T_{s1}$) due to the blue illumination and tbe dark current component D ($T_{s1}$).

Because line memory 68 has been cleared, the data B ($T_{s1}$) + D ($T_{s1}$) from the linear imaging sensor 42 are output unchanged from subtraction circuit 66, and after conversion to digital signals by A/D converter circuit 69, are stored in line memory 70. After such operation, the blue data B ($T_{s1}$) + D ($T_{s1}$) are transmitted to the memory, not shown in the drawing, of the microcomputer 51. Then, in the period $T_B$ shown in FiG. 5(h), the dark current already found in relation to the same time is read out from the table as D ($T_{s1}$), and D ($T_{s1}$) is subtracted from the blue data B ($T_{s1}$) + D ($T_{s1}$) in the memory, not shown in the drawing, of the microcomputer 51, and the true blue data B ($T_{s1}$) are obtained.

The blue data B ($T_{s1}$) + D ($T_{s1}$) are transmitted to the memory, not shown in the drawing, of the microcomputer 51 as well as being transmitted and stored in line memory 68 in advance of the reading out of the green data in the period $T_r$ of FIG. 5(g). In the period $T_{s2}$ shown in FIG. 5(c), the green light emitting diode array is lighted, and film RD is illuminated with a combination of blue and green light. The illumination of the fluorescent tube 31 and the illumination of the green light emitting diode array 32 pass through the film RD to become incident on the linear imaging sensor 42. During the period $T_{s2}$, the linear imaging sensor 42 receives light and accumulates a charge. During period $T_{s2}$, the red light emitting diode array 33 is extinguished or is in an "OFF" state.

In the period $T_{r2}$ shown in FIG. 5(e), data are read out from the linear imaging sensor 42. These data contain the component B ($T_{s2}$) due to the blue illumination, the component G ($T_{s2}$) due to the green illumination, and the dark current component D ($T_{s2}$). Now, because the data B ($T_{s1}$) + D ($T_{s1}$) of the blue illumination time are stored in the line memory 68, in the period $T_G$ of Fig 3(h), the data B ($T_{s2}$) + G ($T_{s2}$) + D($T_{s2}$) output from the linear imaging sensor 42 are input to the non-inverting input terminal of subtraction circuit 66, and the data B ($T_{s1}$) + D ($T_{s1}$) from the line memory 68 are input to the inverting input terminal of subtraction circuit 66 in synchronousity with the scan of the linear imaging sensor 42. Accordingly, the subtraction circuit 66 calculates according to each pixel:

{data B ($T_{s2}$) + G ($T_{s2}$) + D($T_{s2}$)} - {data B ($T_{s1}$)

+ D $(T_{s1})$},

and its output is the true green data G $(T_{s2})$.

During the period $T_{s3}$ shown in FIG 5(d), red light emitting diode array 33 is lighted, and film RD is illuminated with a combination of blue light and red light. The illumination of thc fluorescent tube 31 and the illumination of the red light emitting diode array 33 pass through film RD to become incident on linear imaging sensor 42. During the period $T_{s3}$, the linear imaging sensor 42 receives light and accumulates a charge. In this period $T_{S3}$, the green light emitting diode array 32 is extinguished or is set to an "OFF" state.

In the period $T_{r3}$ shown in FIG. 5(e), data are read out from the linear imaging sensor 42. These data contain the component B $(T_{s3})$ due to the blue illumination, the component R $(T_{s3})$ due to the green illumination, and the dark current component D $(T_{s3})$. Now, because the data B $(T_{s1})$ D $(T_{s1})$ of the blue illumination time are stored in line memory 68, in the period $T_R$ of Fig 3(h), the data B $(T_{s3})$ + R $(T_{s3})$ + D$(T_{s3})$ output from the linear imaging sensor 42 are input to the non-inverting input terminal of subtraction circuit 66, and the data B $(T_{s1})$ + D $(T_{s1})$ from the line memory 68 are input to the inverting input terminal of subtraction circuit 66 in synchronism with the scan of the linear imaging sensor 42. Accordingly, the subtraction circuit 66 calculates according to each pixel:

{data B $(T_{s3})$ + R $(T_{s3})$ + D$(T_{s3})$)} - {data B $(T_{s1})$ + D $(T_{s1})$},

and its output is the true red data R $(T_{s3})$.

The blue data B $(T_{s1})$, the green data G $(T_{s2})$, and the red data R $(T_{s3})$ are transmitted to the host computer, not shown in the drawing, via the interface circuit 71 and the output connector 72.

$T_{s1}$, $T_{s2}$ and $T_{s3}$ have been set equal in the present embodiment example but, as mentioned hereinabove, according to the detection result of the photodetector 35 which detects the amount of light of the fluorescent tube 31, may be varied. Varying the periods $T_{s1}$, $T_{s2}$ and $T_{s3}$, should be done when the accumulation time becomes longer as the amount of light decreases, while, conversely, the accumulation time becomes shorter when the amount of light increases. Control of the accumulation time control circuit 61 by the microcomputer 51 is performed in this manner and will be apparent to those skilled in the art.

It should be noted that when only the blue fluorescent lamp 31 is lighted, the data accumulated in the linear imaging sensor 42 are serially read out and transmitted to the memory of the microcomputer 51. As such, eliminating the dark current component from these data allows the true blue data to be obtained. Moreover, the true green data are obtained by subtracting the blue data, which contains the dark current component, stored in the above-mentioned memory, from the data accumulated in the linear imaging sensor 42 when the blue fluorescent tube 31 and the green light emitting diode array 32 are lighted while these data are being serially read out. The true red data are obtained by subtracting the blue data, which contains the dark current component, stored in the above-mentioned memory, from the data accumulated in the linear imaging sensor 42 when the blue fluorescent tube 31 and the red light emitting diode array 33 are lighted, while these data are being serially read out. Accordingly, the above mentioned method of deciphering color attributes of the present invention provides a unique advantage over existing systems in that flashing of the blue fluorescent tube is unnecessary, and as such, its lighting control circuit is simplified. Ultimately, because the fluorescent tube is not flashed its service life is lengthened and maximized.

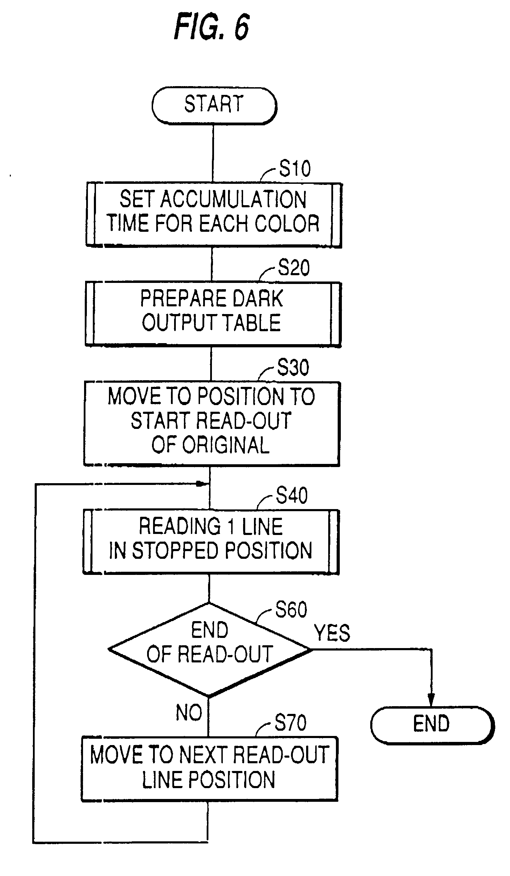

Referring now to FIGS. 6-10, a second embodiment of the present invention will be described. The illuminating optical system 30, light receiving optical system 40 and electrical circuits all are similar to the embodiment depicted in FIG. 3. In the present embodiment, however, the temperature of the fluorescent lamp 31 is stabilized during the readout of lines of the original. As such, the present embodiment has the ability to stabilize the amount of light emitted by the light sources, dark current of the linear imaging sensor 42, or the sensitivity of the linear imaging sensor 42.

In this embodiment, however, line memory 68, D/A converter circuit 67, and subtraction circuit 66 are omitted from the arrangement of FIG. 3. Also, it is sufficient for the output of clamp circuit 65 to be connected to the input of A/D converter circuit 69.

FIGS. 6-10, are flow chart which show an example of the process sequence of the present embodiment. It should be noted that while the process sequence depicted in the flow charts of FIGS. 6-10 may be implemented using computer software and a microcomputer, other firmware designs and dedicated circuitry may also be used. After starting, step S10 denotes the occurrence of the setting of the accumulation time of each color (e.g. RBG). In step S20, the table of the dark current (dark time output) component is prepared. In step S30, the support for the original moves to the starting position for readout, and the initial single 1 line of data is read out in step S40. In step S60, a determination is made as to whether the whole readout has ended (i.e., if the whole image has been scanned); if negative, processing resumes at step S70 and the original moves to the next readout line position and the routine returns to step S40; if affirmative, the routine ends.

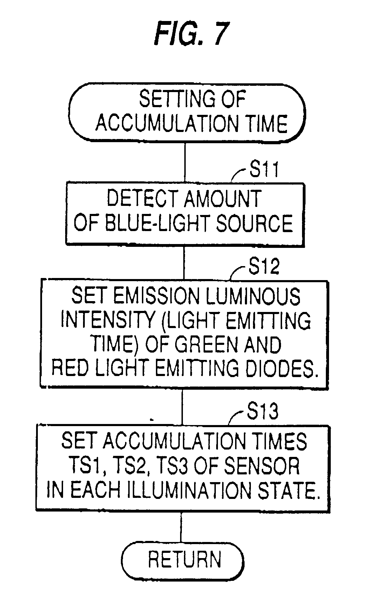

FIG. 7 depicts a flow chart which shows the routine for setting the accumulation time for each color (e.g. RGB). In step S11, the amount of light of the blue fluorescent tube 31 is detected by means of the photodetector 35. At step S12, to balance the detected amount of light, the luminous emission intensities (or light emission times) of the light emitting diodes 32 and 33 are determined based on the detected amount of light, and are set by the microcomputer 51 as internal parameters to control the circuits 56 and 57 which control the amount of light. Furthermore, at step S13, the three accumulation times $T_{s1}$, $T_{s2}$, $T_{s3}$ are determined and are set by the microcomputer 51 as internal parameters to control the accumulation time control circuit 61, such that there is no saturation of the linear imaging sensor 42 either by the total amount of light or by any of the blue, green or red illumination states, and also that nonlinearities close to saturation are avoided.

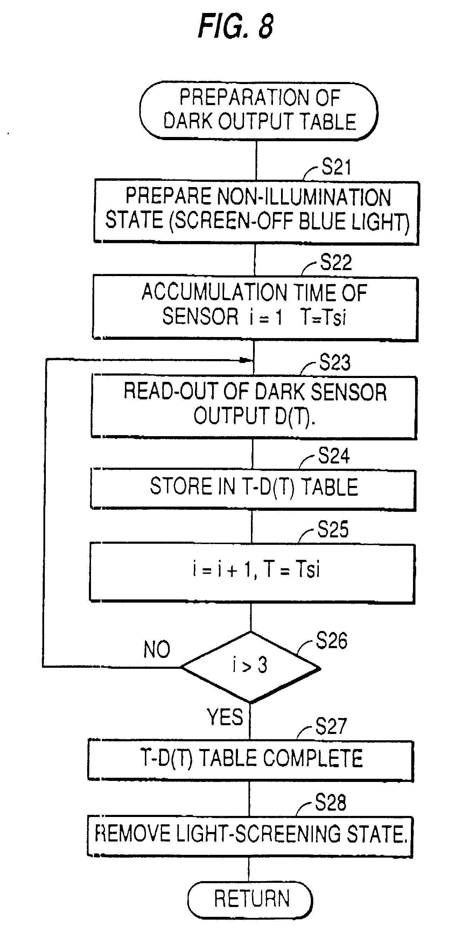

FIG. 8, therein depicted is a flow chart which shows the routine for preparation of the dark time output table. In step S21, the three light sources are all extinguished, or the blue fluorescent tube 31 is still lighted and a screening member is inserted into its light path to screen light from the linear imaging sensor 42 and to create a non-illuminated state. In step S22, the three accumulation times $T_{s1}$, $T_{s2}$, $T_{s3}$ decided in step S13 of FIG. 6 are set. Namely, with $T_{si}$ as the accumulation times, the variable i is first set to 1. Proceeding to step S23, at readout time the light path of the normally lighted blue fluorescent tube 31 is screened off and the readout is performed, with the linear imaging sensor 42 accumulating electric charge for an accumulation time $T_{s1}$. In step 24, the charge accumulated by the linear imaging sensor 42 is stored in the table T - D (t) as the dark time output of the accumulation time $T_{s1}$.

At step S25, 1 is added to the variable i and the accumulation time is set to $T_{s2}$. Upon a return to steps S23- step S26, the dark time output of the accumulation time $T_{s2}$ is similarly read out and stored in the table T - D (t). The dark time output of the accumulation time $T_{s3}$ is similarly stored in the table T - D (t). In step S26, when it is determined that the variable i exceeds 3, the table T - D (t) is completed at step S27, and in step S28 the screened state is removed.

If the table of dark time outputs has been completed, processing is continued at step S30. There, the support for the original is moved to the readout starting position, and in step S40 one line of readout is commenced.

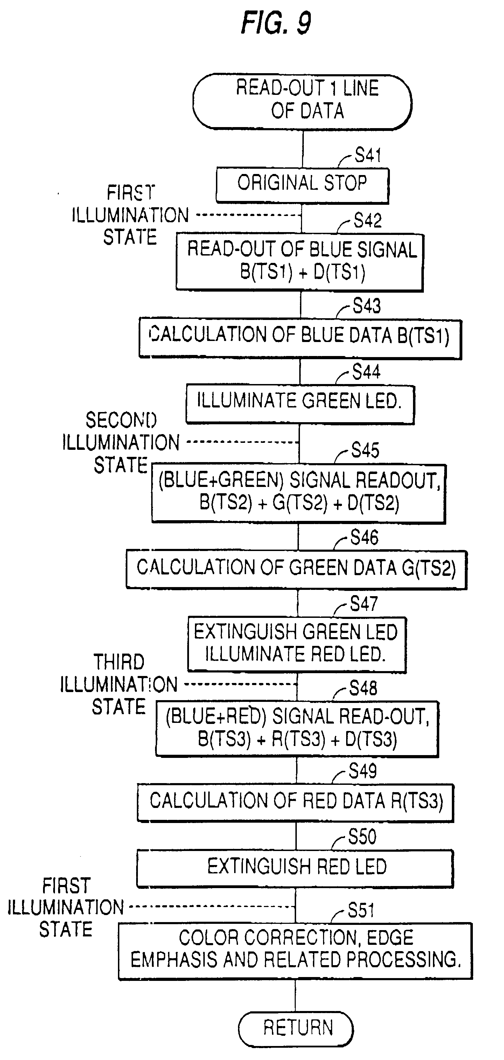

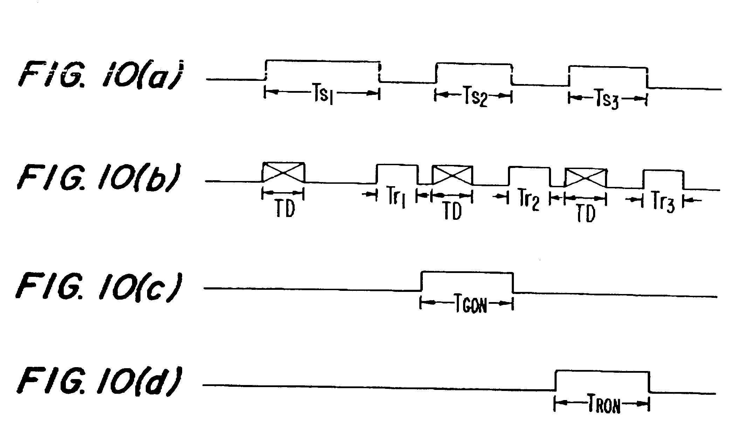

The readout process routine is shown in FIG. 9. Step S41 indicates the point during operation where the original stops. At step S42 only the blue fluorescent tube 31 is lighted. During the accumulation time $T_{s1}$ in the first illumination state, an electric charge accumulates in the linear imaging sensor 42 (see FIG. 10(a)), and the accumulated data B ($T_{s1}$) + D'($T_{s1}$) in the time of illumination with blue light only is read out in the period $T_{r1}$ of FIG. 10(b). At step S43, D ($T_{s1}$) is read out from the previously prepared table of dark time outputs, and the true blue data B ($T_{s1}$) is calculated.

At step S44 and during the period $T_{GON}$ of FIG.

10(c), the green light emitting diode 32 is lighted, and in the second illumination state in which the film RD is illuminated by a combination of blue light and green light, a charge is accumulated in the linear imaging sensor 42 during the accumulation time $T_{s2}$ (see FIG. 10(a)). At step S45, the data B ($T_{s2}$) + G ($T_{s2}$) + D ($T_{s2}$) is read out from the linear imaging sensor 42. Then in step S46 the following calculations are performed in order to calculate the true green data G ($T_{s2}$):

$$\{ \text{data B } (T_{s2}) + G (T_{s2}) + D (T_{s2}) \} \text{ minus } \{ \text{data B } (T_{s1}) * (T_{s2}/T_{s1}) + D (T_{s2}) \}$$

At step S47, the green light emitting diode array 32 is extinguished or set to an "OFF" state. During the period $T_{RON}$ of FIG. 10(d), the red light emitting diode 33 array is lighted, and in the third illumination state in which film RD is illuminated by a combination of blue light and red light, a charge is accumulated in the linear imaging sensor 42 during the accumulation time $T_{s3}$ (see FIG. 10(a)). At step S48, the data B ($T_{s3}$) + G ($T_{s3}$) + D ($T_{s3}$) are read out from the linear imaging sensor 42. And, at step S49, the following calculations are performed in order to calculate the true red data R ($T_{s3}$):

$$\{ \text{data B } (T_{s3}) + G (T_{s3}) + D (T_{s3}) \} \text{ minus } \{ \text{data B } (T_{s1}) * (T_{s3}/T_{s1}) + D (T_{s3}) \}$$

Moreover, the period $T_D$ of FIG. 10(b) shows a period during which an unnecessary charge is discharged from the linear imaging sensor 42.

When the blue, green and red color images have been obtained in the manner just described, the red light emitting diode array 33 is extinguished at step S50 and a return to the first illumination state is performed. Moreover, processing continues at step S51 where color correction, edge emphasis treatment and the like are carried out. The color image data obtained in the manner described above are transmitted to a host computer, not shown in the drawing, via the interface circuit 71 and the output connector 72.

After the end of processing at step S51, it will be determined whether reading out of the original has ended at step S60 of FIG. 6. If the reading out of the original has not ended, movement and stopping of the support for the original and readout of the original are continued. On the other hand, when the determination in step S60 is affirmative, the readout process ends.

At this point in the discussion of the present invention it should be clear that the aforementioned second embodiment illustrates a case where three illumination states had different accumulation times. Moreover, because the differences in accumulation times are considered by the present invention even when the dark time output data are canceled, precise image data are obtained.

Light passing through the original has been described hereinabove, but as shown in FIG. 3 the present invention can also be applied to a device having light which reflects away from an original. Moreover, the time of light emission or the amount of light emitted by the light emitting diode arrays 32 and 33 was varied in accordance with the amount of light emitted from the fluorescent tube 31 but, for example, may be constituted to vary according to negative film or positive film. Furthermore, the first light source has been described as a fluorescent tube, and the second and third light sources as light emitting diode arrays, but the present invention can be applied independently of the proper use of the various kinds of light sources, and in particular, outstanding effects are obtained by means of the combination of the structures described above.

By means of the present invention, as described in detail above, lighting (i.e., turning "ON") or extinguishing (i.e., turning "OFF") the various light sources to obtain a first illumination state with a first light source lighted, a second illumination state with the first and second light sources lighted, and a third illumination state with the first and third light sources lighted, the problems associated with prior color image reading apparatuses as discussed above are solved. In particular, it is the present invention's ability to form image data based on a first signal output from a light receiving means in the first illumination state; a second signal, with the effect of the first light source canceled from the light receiving signal output from the light receiving means in the second illumination state, and a third signal with the effect of the first light source canceled from the light receiving signal output from the light receiving means in the third illumination state, it is not necessary to light and extinguish the first light source for every single line of image scanning. Even more particularly, the present invention's lighting circuitry is simplified over prior known systems, which also results in an extended apparatus service life.

Although a few preferred embodiments of the invention have been shown and described, it will be appreciated by those skilled in the art that many changes may be made in these embodiments, without departing from the principles and spirit of the present invention, the scope of which is defined in the appended claims and their equivalents.

**Claims**

1. A color image reading apparatus for color analyzing a subject disposed on a medium, comprising:
   a first light source to generate light in a first wavelength region of the light spectrum;
   a second light source to generate light in a second wavelength region of the light spectrum;
   a third light source to generate light in a third wavelength region of the light spectrum;
   an ON/OFF control unit to control the ON/OFF state of said first, second, and third light sources;
   a light receiving unit to receive light from the subject to be read when the subject is illuminated by the light from said first, second, and third light sources and to generate light receiving signals in response to light received from said first, second, and third light sources;
   an image data formation unit to form color image data based on said light receiving signals,
   said ON/OFF control unit turns on and turns off said first, second, and third light sources to obtain a first illumination state in which said first light source is ON, a second illumination state in which said first and said second light sources are ON, and a third illumination state said first and said third light sources are ON;
   said image data formation unit forms image data based on a first signal output from said light receiving unit during said first illumination state, and from a second signal output from said light receiving unit during said second illumination state, said second signal having the effect of said first light source being offset, and from a third signal with output from said light receiving unit during said third illumination state, said third signal having the effect of said first light source being offset.

2. The color image reading apparatus according to claim 1, further comprising:
   a detection unit to detect the amount of light emitted by said first light source so that the proportions of the amounts of light from said first, second, and third light sources is controlled, said first, second, and third light sources being controlled so that the lower the amount of light emitted by said first light source the more the emission luminous intensity, the shorter the light emission time of said second and third light sources in said second and third illumination states.

3. The color image reading apparatus according to claim 2, wherein said - light receiving unit includes a charge coupled type imaging element, and wherein the lower the amount of light detected by said detection unit, the longer the accumulation time of said light receiving unit.

4. The color image reading apparatus according to claims 1, 2, or 3, wherein a dark current of said light receiving unit is obtained by reading said light receiving unit output under non-illumination state, said first light receiving signal being formed by eliminating said dark current from said light receiving signal output from said light receiving unit in said first illumination state, said second and third light receiving signals being formed by subtracting the first light receiving signal containing said dark current output from said light receiving unit in said first illumination state from said light receiving signals respectively output from said light receiving unit in said second and third illumination states.

5. The color image reading apparatus according to claims 1, 2 or 3, wherein said first light receiving signal is formed by eliminating said dark current from said first light receiving signal output from said light receiving unit in said first illumination state, said second and third light receiving signals being formed by the respective processes of subtracting said first light receiving signal and said dark current from said light receiving signals respectively output from said light receiving unit in said second and third illumination states.

6. The color image reading apparatus according to claim 1, wherein said first light source remains ON during said first, second, and third illumination states.

7. A color image reading apparatus for color analyzing a subject disposed on a medium to produce data corresponding to said subject comprising:
   a light emitter unit to emit light having a plurality of wavelengths, said light emitter unit having a light source which remains on during all phases of operation of said color image reading apparatus; and
   a light receiver unit to receive light emitted from said light emitter unit and to generate signals corresponding to the particular wavelengths of the light emitted by said light emitter unit; and
   an image data formation unit which forms image data based on said signals, said image data being formed by having the effects of particular wavelengths of light being removed from said signals in accordance with the operation of said light emitter unit.

8. The color image reading apparatus according to claim 7 wherein said light emitter unit further comprises a first light source to generate light in the green region of the light spectrum, and a second light source to generate light in the red region of the light spectrum, said first light source and said second light source being turned on and turned off in accordance with the operation of said light emitter unit.

9. The color image reading apparatus according to claim 7 wherein said static light source emits light in the blue region of the light spectrum.

10. The color image reading apparatus according to claim 9 wherein said image data formation unit forms said image data by subtracting the effects of said light emitted in the blue region of the light spectrum from said signals in accordance with the operation of said light emitter unit.

11. A method of color analyzing an image comprising the following steps:
   generating a first illumination state wherein said image is illuminated by light having a first wavelength;
   generating a second illumination state wherein said image is illuminated by light having a second wavelength;
   reading the light reflected from said image;
   producing signals in accordance with the light read during said reading step; and
   processing said signals to produce color image data wherein the effects of the light produced during said first illumination state are cancelled out from said signals.

12. A color image reading apparatus for color analyzing a subject disposed on a medium, comprising:
   a light emitter unit to emit light having a plurality of wavelengths, said light emitter unit having light sources which are controlled to be ON and OFF; and
   a light receiver unit to receive light emitted from said light emitter unit and to generate signals corresponding to the particular wavelengths of light emitted by said light emitter unit; and
   a circuit to measure the dark current of said light receiving unit under the condition of a non-illumination state and to make a T-D(T) table for possible integration time of said light receiving unit and to compensate output signals from said light unit.

13. A method of analyzing the color of a subject, in which the subject is illuminated using light of at least three different colors during respective illumination states to generate respective signals indicative of the color of the subject in response to the light from the subject during those states, characterised in that the three different colors have at least one wavelength in common, and two of the signals are processed to at least reduce the effect produced by the presence of that wavelength.

FIG. I
(PRIOR ART)

FIG. 2
(PRIOR ART)

# FIG. 3

## FIG. 4

EP 0 597 696 A2

FIG. 5(a)

FIG. 5(b)

FIG. 5(c)

FIG. 5(d)

FIG. 5(e)

FIG. 5(f)

FIG. 5(g)

FIG. 5(h)

$Tm$

$Ts_1$

$Ts_2$

$Ts_3$

$Tr_1$   $Tr_2$   $Tr_3$

$Tw$

$Tt$

$TB$   $TG$   $TR$

EP 0 597 696 A2

## FIG. 6

START

S10
SET ACCUMULATION
TIME FOR EACH COLOR

S20
PREPARE DARK
OUTPUT TABLE

S30
MOVE TO POSITION TO
START READ-OUT
OF ORIGINAL

S40
READING 1 LINE
IN STOPPED POSITION

S60
END
OF READ-OUT

YES → END

NO

S70
MOVE TO NEXT READ-OUT
LINE POSITION

# FIG. 7

SETTING OF
ACCUMULATION TIME

S11

DETECT AMOUNT
OF BLUE-LIGHT SOURCE

S12

SET EMISSION LUMINOUS
INTENSITY (LIGHT EMITTING
TIME) OF GREEN AND
RED LIGHT EMITTING DIODES.

S13

SET ACCUMULATION TIMES
TS1, TS2, TS3 OF SENSOR
IN EACH ILLUMINATION STATE.

RETURN

## FIG. 8

```
   ┌─────────────────────┐
   │   PREPARATION OF     │
   │  DARK OUTPUT TABLE   │
   └─────────────────────┘
             │
             │        S21
   ┌─────────────────────────────┐
   │  PREPARE NON-ILLUMINATION    │
   │ STATE (SCREEN-OFF BLUE LIGHT)│
   └─────────────────────────────┘
             │
             │        S22
   ┌─────────────────────────────┐
   │   ACCUMULATION TIME OF       │
   │   SENSOR  i = 1   T=Tsi      │
   └─────────────────────────────┘
             │
             ▼        S23
   ┌─────────────────────────────┐
   │  READ-OUT OF DARK SENSOR     │
   │      OUTPUT D(T).            │
   └─────────────────────────────┘
             │
             │        S24
   ┌─────────────────────────────┐
   │   STORE IN T-D(T) TABLE      │
   └─────────────────────────────┘
             │
             │        S25
   ┌─────────────────────────────┐
   │      i = i + 1, T = Tsi      │
   └─────────────────────────────┘
             │
             │        S26
    NO      ◇───────◇
   ◀────────│ i > 3 │
            ◇───────◇
             │
            YES       S27
   ┌─────────────────────────────┐
   │    T-D(T) TABLE COMPLETE     │
   └─────────────────────────────┘
             │
             │        S28
   ┌─────────────────────────────┐
   │ REMOVE LIGHT-SCREENING STATE.│
   └─────────────────────────────┘
             │
        ┌─────────┐
        │ RETURN  │
        └─────────┘
```

## FIG. 9

```
        ┌─────────────────────────┐
        │   READ-OUT 1 LINE        │
        │      OF DATA             │
        └─────────────────────────┘
                     │
                     │        ┌S41
                ┌─────────────────────┐
                │   ORIGINAL STOP      │
FIRST           └─────────────────────┘
ILLUMINATION ------------│        ┌S42
STATE           ┌─────────────────────────┐
                │ READ-OUT OF BLUE SIGNAL  │
                │   B(TS1) + D(TS1)        │
                └─────────────────────────┘
                     │        ┌S43
                ┌─────────────────────────────┐
                │ CALCULATION OF BLUE DATA B(TS1) │
                └─────────────────────────────┘
                     │        ┌S44
                ┌─────────────────────┐
                │ ILLUMINATE GREEN LED.│
SECOND          └─────────────────────┘
ILLUMINATION ------------│        ┌S45
STATE           ┌──────────────────────────────┐
                │ (BLUE+GREEN) SIGNAL READOUT,  │
                │   B(TS2) + G(TS2) + D(TS2)    │
                └──────────────────────────────┘
                     │        ┌S46
                ┌──────────────────────────────┐
                │ CALCULATION OF GREEN DATA G(TS2) │
                └──────────────────────────────┘
                     │        ┌S47
                ┌─────────────────────────┐
                │ EXTINGUISH GREEN LED     │
THIRD           │ ILLUMINATE RED LED.      │
ILLUMINATION ------------┘        ┌S48
STATE           ┌──────────────────────────────┐
                │ (BLUE+RED) SIGNAL READ-OUT,   │
                │   B(TS3) + R(TS3) + D(TS3)    │
                └──────────────────────────────┘
                     │        ┌S49
                ┌──────────────────────────────┐
                │ CALCULATION OF RED DATA R(TS3)  │
                └──────────────────────────────┘
                     │        ┌S50
                ┌─────────────────────┐
                │ EXTINGUISH RED LED   │
FIRST           └─────────────────────┘
ILLUMINATION ------------│        ┌S51
STATE           ┌──────────────────────────────────┐
                │ COLOR CORRECTION, EDGE            │
                │ EMPHASIS AND RELATED PROCESSING.  │
                └──────────────────────────────────┘
                     │
                ┌─────────────┐
                │   RETURN     │
                └─────────────┘
```

18

EP 0 597 696 A2

FIG. 10(a)

FIG. 10(b)

FIG. 10(c)

FIG. 10(d)